# EUROPEAN PATENT APPLICATION

(11) **EP 3 822 641 A1**
(43) Date of publication of application: **19.05.2021**
(21) Application number: 19208587.6
(22) Date of filing: 12.11.2019
(51) Int. Cl.: G01N 35/10, G01N 35/00, G01N 35/04

(54) **DETECTING OBJECTS IN A LABORATORY ENVIRONMENT**

(71) Applicant: Sartorius Biohit Liquid Handling Oy, 00880 Helsinki (FI)
(72) Inventor: KUITUNEN, Tuomas, 00880 Helsinki (FI); SALIVAARA, Kari, 00880 Helsinki (FI)
(74) Representative: Laine IP Oy

(57) **Abstract**

According to an example aspect of the present invention, there is provided a method for detecting the presence of an object located on at least one surface of a liquid handling system and obtaining information regarding the object, the method comprising: obtaining at least one value from at least one sensor, the value representing a distance from the sensor to at least one reference feature of the at least one object; performing at least one determination based on the value, the determination comprising at least comparing the obtained value with at least one stored value; and identifying at least one attribute of at least one object based on the at least one determination.

## Description

### FIELD

Pipettes may be hand-held or automated media delivery devices that may be used for delivering a precisely defined amount of liquid from one receptacle to another receptacle. Liquid is aspirated into and delivered from a disposable tip that is attached to a lower end of the pipette. The present disclosure relates to detecting the presence of an object in an automatic liquid handling system as well as identifying the type of object present in the system as well as other attributes relating to the object.

### BACKGROUND

In laboratories or similar scientific or industrial settings, it is beneficial to have automatic liquid handling systems for e.g. routine or very precise work. In such applications, a major concern for end-users is the possibility of a process error halting the operation of the process. Laboratory supplies such as disposable pipette tips and well plates may be typically packaged in predetermined ways. Using incorrect or improper supplies such as pipette tips or positioning the tip package incorrectly may be examples of a process error which users would prefer to avoid. In addition, using the wrong equipment is another such error.

In typical manual and automatic (robotic) liquid handling applications, the selection and positioning of the supply packages and laboratory is the responsibility of a human operator, which may lead to errors. In some processes, the automatic application includes an automatic verification of supply packages by e.g. scanning the package shape from an overhead position or by reading printed tags, stickers or markers on the packages. This verification is done prior to the process start. However, implementing such verification procedures is expensive and results in delays to the process being undertaken.

### SUMMARY OF THE INVENTION

The invention is defined by the features of the independent claims. Some specific embodiments may be defined in the dependent claims.

According to a first aspect of the present invention, there is provided a method for detecting the presence of an object located on at least one surface of a liquid handling system and obtaining information regarding the object, the method comprising: obtaining at least one value from at least one sensor, the value representing a distance from the sensor to at least one reference feature of the at least one object; performing at least one determination based on the value, the determination comprising at least comparing the obtained value with at least one stored value; and identifying at least one attribute of at least one object based on the at least one determination.

According to a second aspect of the present invention, there is provided an apparatus comprising at least one sensor, the apparatus being configured to at least: obtain at least one value from at least one sensor, the value representing a distance from the sensor to at least one reference feature of the at least one object; perform at least one determination based on the value, the determination comprising at least comparing the obtained value with at least one stored value; and identify at least one attribute of at least one object based on the at least one determination.

According to a third aspect of the present invention, there is provided an object comprising a reference feature, the feature comprising multiple surfaces at essentially different distances from the sensor and wherein the multiple surfaces may be optionally parallel to one another.

According to a fourth aspect of the present invention, there is provided a reference feature comprising an optically differentiated feature, wherein the optically differentiated feature has the cross-section and/or footprint of a geometric shape and wherein the reference feature is configured so that an image of the reference feature captured by a imaging device allows the determination of distance and/or location data with respect to the imaging device.

Various embodiments of the first, second, third, and/or fourth aspect may comprise at least one feature from the following bulleted list:
- wherein the at least one determination comprises determining the position of the object,
- wherein the position of the object is determined in at least one second dimension with respect to the distance,
- wherein the at least one attribute comprises the type or condition of the object,
- wherein at least one second value is obtained from at least one second sensor and the determination is based at least partly on said second value in addition to the first value and wherein the at least one determination comprises determining the condition of the object by comparing the first and second values to stored values,
- wherein the reference feature of the at least one object comprises multiple reference surfaces arranged at different distances from the sensor and wherein the multiple reference surfaces may be parallel to one another,
- wherein the dimensions of at least one reference surface may be between 10 by 10 millimeters, preferably less than 5 by 5 millimeters, for example 1 by 1 millimeters,
- wherein the at least one sensor is a time-of-flight sensor,
- wherein the at least one sensor is a reflected light sensor,
- wherein the at least one sensor is a mechanical gauge,
- wherein the method comprises using at least one second sensor to perform at least one second measurement, and wherein the at least one determination is at least partly based on the first and second measurements,
- obtain at least one value from at least one sensor, the value representing a distance from the sensor to at least one reference feature of the at least one object,
- wherein the reference feature of the at least one object comprises multiple reference surfaces at different distances from the sensor and wherein the multiple surfaces may be parallel to one another,
- wherein the at least one attribute comprises the type or condition of the object,
- wherein the at least one determination is used to determine the position of the object,
- wherein the at least one determination is based at least partly on a second measurement performed by at least one second sensor,
- wherein the reference feature may comprise an optically differentiated geometric shape,
- wherein the reference feature may be configured to be illuminated and responsive to illumination, increase the accuracy of images captured of said reference feature,
- wherein the object is comprised of at least one of the following laboratory items: a pipette tip package, a pipette tip rack, a disposable pipette tip package, a microwell plate, a bottle rack, a test tube rack.

### BRIEF DESCRIPTION OF THE DRAWINGS

FIGURES 1A, 1B and 1C illustrate a schematic view of an exemplary object comprising at least one reference feature in accordance with at least some embodiments of the present invention;
FIGURE 2 illustrates a schematic view of an embodiment wherein at least one reference (identifying) feature is used to identify a object and verify the measurements of said object in accordance with at least some embodiments of the present invention;
FIGURE 3 illustrates a schematic view of an exemplary object comprising at least four reference features in accordance with least some embodiments of the present invention, and
FIGURES 4A, 4B, 4C and 4D illustrate a schematic view of an exemplary object comprising at least one complex reference feature in accordance with least some embodiments of the present invention, and
FIGURE 5 illustrates a schematic view of an exemplary object comprising at least four reference features in accordance with least some embodiments of the present invention, and
FIGURES 6A, 6B and 6C illustrate a schematic view of an exemplary object comprising at least one complex reference feature in accordance with least some embodiments of the present invention, and
FIGURE 7 illustrates a schematic view of an exemplary object comprising at least five reference features in accordance with least some embodiments of the present invention, and
FIGURE 8 illustrates a schematic view of an exemplary object comprising at least four reference features in accordance with least some embodiments of the present invention, and
FIGURE 9 illustrates a schematic view of an exemplary object comprising at least one sloped reference feature, being detected in accordance with least some embodiments of the present invention, and
FIGURES 10A and 10B illustrate a schematic view of detecting an exemplary object comprising at least one reference feature, the detection taking place through an optically transparent second exemplary object in accordance with least some embodiments of the present invention, and
FIGURE 11 illustrates a schematic view of detecting an exemplary object comprising at least one reference feature, wherein the reference feature is a optically variant area of the object and the detection takes place through the optically variant area and the reference surface is part of a reference element placed on the surface of the liquid handling apparatus in accordance with at least some embodiments of the present invention, and
FIGURE 12A, and 12B illustrate a schematic view of an exemplary pipette tip rack comprising at least two reference features, wherein the detection of the pipette tip rack takes place from underneath the rack, and
FIGURES 13A, 13B and 13C illustrate a schematic view of an exemplary detection and measurement embodiment wherein at least one imaging means is used to capture an analysable image of at least one illuminated reference element, and
FIGURE 14 is a flow graph detailing a method to determine the position of a object in accordance with at least some embodiments of the present invention.

### EMBODIMENTS

In this disclosure, a method and apparatus may be described which reduce or eliminate errors in liquid handling processes by performing measurements relative to the object and the liquid handling system and performing determinations and reaching conclusions thereof; or causing such measurements, determinations and conclusive interpretations to be performed. In at least some of the embodiments of this disclosure, an object is identified by measuring at least one precisely defined element, component or part, which may be termed a reference feature, which is present in the object. In addition, the present disclosure allows sensing how the object is positioned by using at least one sensor to sense at least one feature of the object.

In the context of the disclosure, the objects to be identified, positioned, measured, imaged and/or verified at least partly by the invention or by the aid of the invention may be at least one of the following laboratory items: a pipette tip package, a disposable pipette tip package, a microwell plate, a bottle rack, a test tube rack, any other laboratory equipment, or a package or collective arrangement of any of the preceding objects. The object may comprise any material, especially thermoplastic materials may be preferred for the ease of manufacturing whereas metal materials may be very durable. In the embodiments presented in this disclosure, the sizing of the liquid handling system or laboratory device as well as the sizing of the objects may be preferably in accordance with the following standards: ANSI SLAS 1-2004, (formerly recognized as ANSI/SBS 1-2004), but may also be dimensioned or shaped otherwise. The shapes or footprints of the objects may be rectangular, square, round, oval, circular, annular, t-shaped, x-shaped, or any other geometrical shape. For example a microplate may have a footprint of 127,76 millimeters times 85.46 millimeters.

In accordance with the solution presented in this disclosure, the at least one sensor used to detect and sense the object position could be always active, i.e. powered on. This allows for real-time detection and sensing of the object and any movement of the object. The solutions presented herein may be cost-effective to implement and do not require any additional marks, tags or stickers on the object. Rather, the geometry used to identify the object is implemented during the manufacturing process, such as in a molding process or in a post-manufacturing precisely controlled process.

In accordance with the present disclosure, embodiments of the disclosure can be implemented by using sensors based at least on the following technologies singly or jointly: time of flight of reflected light, reflection angle measurement, intensity measurement, mechanical gauge, electroluminescence, inductance, capacitance, machine vision technologies. It is possible to use the above-mentioned technologies also as a reference value or reference channel, singly or jointly. To clarify, the reference value or channel may utilize the same technology as the measurement or a different technology. In addition, multiple and/or differing wavelengths, frequencies, power levels or transmission attributes may be used in sensing or to obtain the above-mentioned reference values. In at least some of the embodiments of the disclosure, the sensor equipment is also used for other purposes in the apparatus such as quality control, lighting, or microplate reading. Such a use provides benefits as additional equipment is not needed to achieve the desired performance, leading to a more efficient hardware and software solution.

In some embodiments of the disclosure, sensors may be used which may comprise multiple individual sensors, either of the same technology or different technologies. The individual sensors may be arranged with reference to the plane of the surface in a line shape, a circle shape, an X shape, or any other geometrical shape. The sensors may be at different depths within the surface and they may have different orientations, e.g. if a first individual sensor has an orientation of 0 degrees (straight up), the second one may be oriented at +15 degrees in any direction. As previously stated, at least one of the individual sensors may be used as a reference channel.

In embodiments of the disclosure, sensors may be used to at least determine distances between the sensors and between one or more features of objects, the objects being manually or automatically movable within the liquid handling system or laboratory device. Typical sensing distances suitable for use with the embodiments disclosed herein may be between 0.01 millimeters and 150 millimeters, preferably between 1 millimeter and 20 millimeters.

The methods and operations disclosed herein may be performed using a control system comprising at least one processing core and memory as stated later in this disclosure, or alternatively using analog means to sense, determine and convey information regarding the status of the object within the liquid handling system. Such a system has the advantages of being simple to implement as part of the system and requires less maintenance than a digital-based system. For example, a sensor may be coded to output a certain voltage or current when the measured value is within a predetermined range. The sensor may itself comprise a memory to store a programmed or taught value. Sensors in the embodiments disclosed herein may be connected via wired or wireless connection to a control system of the sensing system, or, alternatively or additionally, to a control system of the liquid handling module. The location of the sensors in the liquid handling system or laboratory device corresponds with the location of the reference features on the object. That is to say, the sensors may be configured so that they may be positioned to detect the reference features or other features of the objects in the system. In exemplary embodiments of the disclosure, the sensors may be arranged in a grid throughout the system to provide coverage of the entire working area of the liquid handling system.

Values measured by the sensors may be transmitted to the control system at certain times or with a certain predefined polling interval. The values may be standardized, averaged, scaled, or other necessary mathematical operations may be performed on them. The values may be stored locally in a database, spreadsheet, look-up table or other means of electronic storage. Additionally or alternatively, the values may also be stored on a remote computer system such as a server for updating, referencing, benchmarking or backup purposes. Typically, measured or calculated values may be compared to a predefined set of reference values in the control system to obtain at least one logical conclusion such as: object is present or object is not present. These predefined reference values and the conclusions thereof may be defined by the manufacturer of the liquid handling system or by the user or a third party such as a maintenance technician.

Multiple values, such as sensor readings or otherwise obtained or calculated values in accordance with the embodiments of the disclosure may be subjected to at least the following methods: coordinate adjustment, trigonometric operations, addition, division, spatial calculations, matrix operations.

In the context of the disclosure, reference surfaces may be used for various purposes. Such a reference surface may be a designated surface or a designated part of a feature of an object. A reference surface may be treated, machined, finished, colored or otherwise modified, for example to beneficially improve the optical qualities of the surface such as reflectivity. The reference surface may also comprise at least one of: a mirror, a lens, a feature designed to convey information such as a barcode, QR tag. Incorporating one or more of the above-mentioned elements into a reference surface further increases the information obtainable from the object into the control system or may assist the user in visually identifying the reference surface in a potential fault situation. In an exemplary embodiment, the differentiation between the alignment surface and the second, third and nth surfaces comprises at least one of the following: height difference, reflectivity, coloring, coating. For example, the surfaces may be both at a different height and have different reflectivity values with respect to the sensor.

In at least some embodiments of this disclosure, the objects to be identified, positioned, and/or measured comprise reference features. Reference features, which may also be known as distinguishing features, may be features premanufactured on the object or, in the alternative, preattached to the object for at least the purpose of being used with the methods and apparatuses of the disclosure. A reference feature comprises a body or, in the case of a cavity-type feature, a cavity formed by a recess in the object. The reference feature may further comprise one or more reference or alignment feature such as a reference surface. Therefore, in at least some exemplary embodiments of the disclosure, the body of the feature is part or portion of the object or, additionally or alternatively, contacts the object. In an exemplary embodiment, termed a simple reference feature, the body of the reference feature is a rectangular cuboid with orthogonal planar sides and the reference surface is an orthogonally oriented planar surface of the body which faces away from the object. More specifically, in the exemplary embodiment the reference surface is the surface of the body which does not contact the object. Alternatively or additionally, in this or other embodiments, any of the surfaces of the body of the feature or the physical properties of the body of the feature may be used in order to at least obtain improved measurement results, reference channels or secondary measurement values. In at least some embodiments in accordance with the invention, at least two surfaces may be used for measurement purposes, wherein the surfaces may be oriented perpendicularly to each other to provide for measurements in different geometrical planes. Attaching of reference features may be done using any suitable known methods, including methods disclosed later within this disclosure.

In an alternative or additional embodiment, the body of the reference feature is cylindrical and the reference surface is either an orthogonally oriented planar surface or a hemisphere with the pole of the hemisphere being situated at the furthest point relative to the body of the object. Such a cylindrical body, which may also be called a peg, provides benefits in tolerances and manufacturability, for example in thermoplastic molding processes wherein manufacturing round shapes is easier than rectangular shapes. Inversion of the reference surface, e.g. embodiments wherein the reference surface is a cavity within the object, is also beneficial in accordance with the present disclosure, as such cavities may be simple to manufacture. Said cavities may optionally be filled with optically clear material to allow for handling and to prevent debris from entering the cavity. The body and the reference surface may be also arranged according to any of the other reference features disclosed herein.

In another exemplary embodiment, termed a complex reference feature, the reference feature is comprised of a body, further comprising at least one reference surface. In further embodiments, the reference feature may comprise multiple reference surfaces, which may be arranged at different heights relative to the object body. In an exemplary embodiment the multiple surfaces may be planar and essentially parallel to one another. In another exemplary embodiment the multiple surfaces may be planar and oriented at different angles respective to one another. In another exemplary embodiment, at least one surface of the reference feature comprises a curved or sloped surface. Similarly to the simple reference feature discussed above, the complex reference feature may be part of the object or be attached to the object using any known means including those listed within this disclosure.

In a first exemplary embodiment of the present disclosure, the objective is to sense the presence of at least one object, for example a package of disposable pipette tips. This is achieved by using at least one sensor, which detects the surface of the bottom of the object at the correct predefined distance from the surface of the automated module table, tray or other handling surface. If the sensor returns the expected value, as specified later in this disclosure, the system can conclude that the desired object is present.

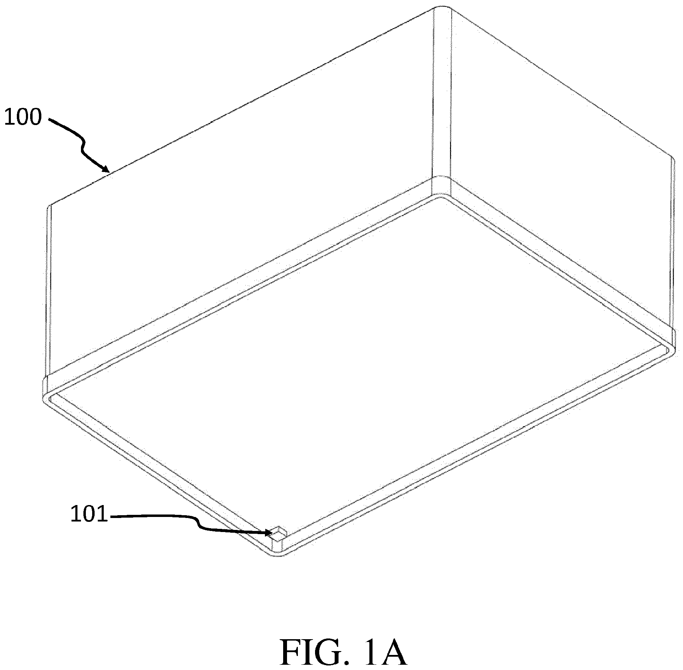

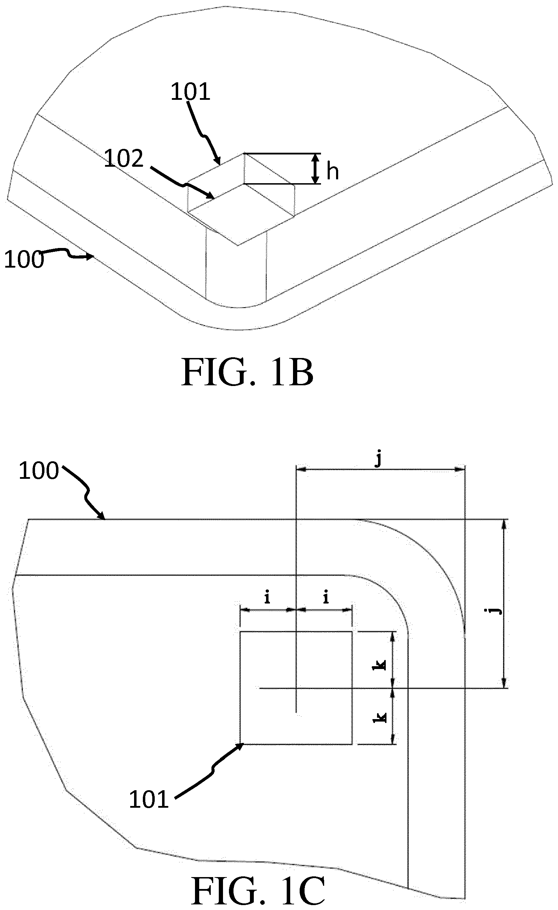

FIGURES 1A, 1B and 1C display a schematic view of an embodiment in accordance with the first exemplary embodiment of the disclosure.

FIGURE 1A illustrates a reference feature 101 located on the object in accordance with at least some embodiments of the present invention. The object 100 may be any object relating to liquid handling applications, preferably one of the above-mentioned objects, in particular a disposable pipette tip package. As can be seen in FIGURE 1B, the reference feature 101 comprises a body 101 and a reference or alignment surface 102. In this embodiment, the body of the reference feature is a rectangular cuboid with orthogonal planar sides and the reference surface is an orthogonally oriented planar surface of the body which faces away from the object. More specifically, in this embodiment the reference surface is the surface of the body which does not contact the object. The body and the reference surface may be also arranged according to any of the other reference features disclosed herein.

In an exemplary embodiment, the reference surface 102 is not surrounded by additional surfaces, and the reference surface 102 has a height differential compared to the underside of the object 100. The height differential is illustrated as dimension h in the Figure 1B. The height differential may be between 0.5 millimeters and 150 millimeters, preferably between 5 and 10 millimeters. In a further exemplary embodiment, the dimension h is 6 millimeters. This type of reference feature, which comprises a reference surface arrangement in accordance with Figures 1A - 1C is called a simple reference feature as discussed above. Other types of reference feature have different reference surface arrangements and may be called complex reference features. The dimensions mentioned in the context of one type of feature, e.g. a complex feature, may be also usable with the other type, i.e. simple feature, and vice versa. In an exemplary embodiment, the reference feature 101 is fabricated directly as part of the body of the object 100. Fabricating features directly on the body, using accurate manufacturing methods, eliminates the possibility of the feature being incorrectly positioned with respect to the object and therefore increases the accuracy of the initial measurements and consequently the determinations performed in accordance with the methods disclosed herein.

FIGURE 1C illustrates a detail view of the placement of the simple reference feature in accordance with at least some embodiments of the present invention. The dimensions k and i may be preferably between 0.05 millimeters and 25 millimeters, more preferably the dimension is between 1 and 5 millimeters. The dimension j is preferably between 1 millimeters and 100 millimeters, more preferably between 3 and 10 millimeters. In an exemplary embodiment, the dimension k is 1.5 millimeters and the dimension j is 4.5 millimeters. The dimensions may be independent from each other. A beneficial effect from this range of dimensions is that the features can be quite small with respect to the object but still provide precise measurements and therefore good accuracy for the methods of this disclosure.

In a further exemplary embodiment usable with the embodiments disclosed herein, the type of object is identified using at least one proximity sensor. Identifying the object necessarily involves sensing the presence of the object and may involve other methods disclosed herein. In a further embodiment, at least two sensors may be used - a first sensor 211 used to detect the presence of the object and a second sensor 212 used to measure the distance between a distinctive or reference feature 102 of the object and the liquid handling system table surface 201. The first sensor may be of the proximity sensor type and the second of the distance sensing type. Therefore, at least one of the presence of the object from the first sensor and the correct sensor value from the second value may be used to make the determination relating to the object. The determination may be at least one of: the presence, identity, condition of the object. The identity of the object may comprise information related to at least the following: type of object, date of manufacturing of object, manufacturer of object. The identity may be conveyed via suitable inventory identification methods known to persons skilled in the art, including the measured height channels forming a multibit code which allows looking a specific reference to said identity, e.g. automatically via a network such as the networks described within this disclosure.

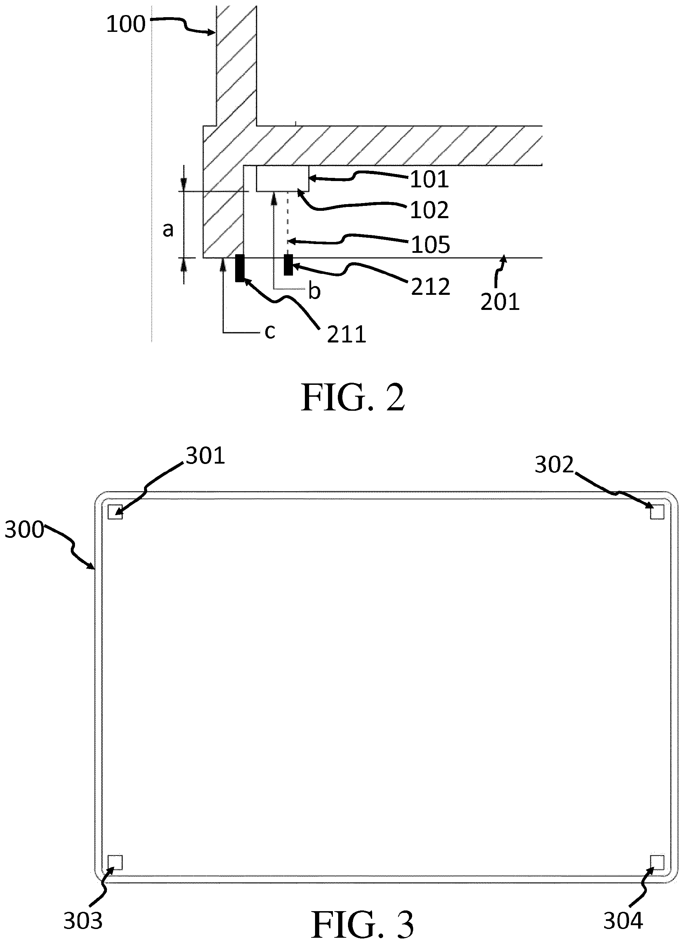

FIGURE 2 illustrates a schematic view of at least some embodiments of the present invention wherein the type of object is identified using at least one sensor. The object 100 rests upon the surface 201 of the liquid handling system. In the embodiment shown in Figure 2, the object is directly contacting the surface, however in embodiments of the disclosure there may be provided a base or mount between the object and the surface. The sensors 211 and 212 may be fixedly mounted within the surface, i.e. flush with respect to the surface. In embodiments of the disclosure the sensors may be mounted deeper within the surface, exemplarily within a depth of 20 millimeters, preferably at a depth of less than 5 millimeters. Further, the sensors may also be mounted above the surface. In the context of this disclosure, any measurements referred to as between objects and sensors may comprise a positive or negative offset value or a trigonometric calculation based on the actual reading of the sensor.

The sensors 211 and 212 detect the object using at least one of the technologies disclosed elsewhere in this disclosure. Sensors 211 and 212 may be connected via wired or wireless connection to the control system of the sensing system, or, alternatively or additionally, to the control system of the liquid handling module. The connections may be not shown in the figures of this disclosure.

In the exemplary embodiment depicted in Figure 2, the sensor 211 detects the distance between the surface 201 and the object 101, and the result of the detection is transmitted to the control system. Based on the result, the control system performs a first determination which comprises at least looking up the corresponding value in an electronically stored set of values and comparing the measured value to the stored value. The control system then determines the physical situation based on the first determination. In the situation depicted in Figure 1, the distance is very small, and the conclusion can be reached that an object is present. In some embodiments in accordance with the present disclosure the sensor 211 is optional, i.e. the invention may accomplish presence detection and object type determination with only a single sensor, e.g. sensor 212. However, the presence and usage of the sensor 211 is beneficial for at least the reason that having multiple sensors leads to increased accuracy in detection, fewer false positives as well as providing confirmation of the rough position of the object.

Simultaneously, or alternatively before or after the process relating to sensor 211, the sensor 212 detects the distance between the surface 201 and the object 100, more specifically the distance between the sensor 212 and the reference surface 102 of the reference feature 101 and the result is also transmitted to the control system. In this case as well, the control system performs a determination. In the embodiment shown in Figure 1, this is a second determination, as at least two determinations may be performed in this embodiment. The determination comprises at least looking up the corresponding value in an electronically stored set of values and comparing the measured value to the stored value, which may comprise a distance value. As different types of objects will have different reference features, the result will depend on which type of object is present in the system. Therefore, based on the measurement of sensor 212, the presence of the object 101 is detected and based on the measurement of sensor 212, the predefined type of the object 101 is identified.

Different objects will have a different base or foot width (dimension c in Figure 2), as well as possibly different widths for the reference surface 102 of the reference feature 101 (dimension b in Figure 2) and a different distance from the surface to the reference feature (dimension a in Figure 2). In an exemplary embodiment the dimension or distance a is 2.5 millimeters for a certain type of object and for another type the distance a is for example 6 millimeters. The dimension b is preferably between 1 millimeters and 100 millimeters, more preferably the dimension is between 1 and 15 millimeters. The dimension c is preferably between 1 millimeters and 100 millimeters, more preferably between 2 and 12 millimeters. In an exemplary embodiment, the dimension b is 7.5 millimeters and the dimension c is 3 millimeters.

In a second exemplary embodiment, the objective is to sense or detect the position of the object in addition to the presence of the object. As in the previous exemplary embodiment, at least one sensor is used to determine at least one value and if the sensor returns a value identical to a preprogrammed value or within a specified error tolerance, it is concluded by the system that the object is present and that the object is correctly positioned. Using only a single sensor as a so-called measurement point may result in situations where, even if the sensor value is correct, the position of the object is incorrect and therefore, in conjunction with at least this embodiment, using multiple sensors leads to better accuracy in sensing that the object is correctly positioned. In a further exemplary embodiment, preferably at least two sensors may be used at opposite corners of the object. In a second further exemplary embodiment, three or four sensors may be used. The sensors may be positioned beneficially at corners or other locations relative to the intended location of the object. In addition, the sensors may be positioned to measure different dimensions in addition to the Z dimension to achieve 6 degree of freedom position sensing: X, Y, Z and roll, pitch and yaw of the object. It is also possible to include a multitude of sensors to achieve improved accuracy with regards to the object position being correct and to provide reference values or reference channels.

FIGURE 3 illustrates a schematic view of an exemplary embodiment suitable for use the embodiments disclosed herein, wherein the object 300 is shown with four reference features 301, 302, 303, 304. One reference feature is located at each corner of the object. The reference features 301, 302, 303, 304 may be any type of reference feature disclosed herein. The reference features 301, 302, 303, 304 may be mutually identical or some or all of the features may be of different types or have different dimensions with respect to each other. In a further exemplary embodiment, the use of at least one complex reference feature with at least one simple reference feature provides for increased accuracy in the measurement process without the need to manufacture extraneous complex features on the object.

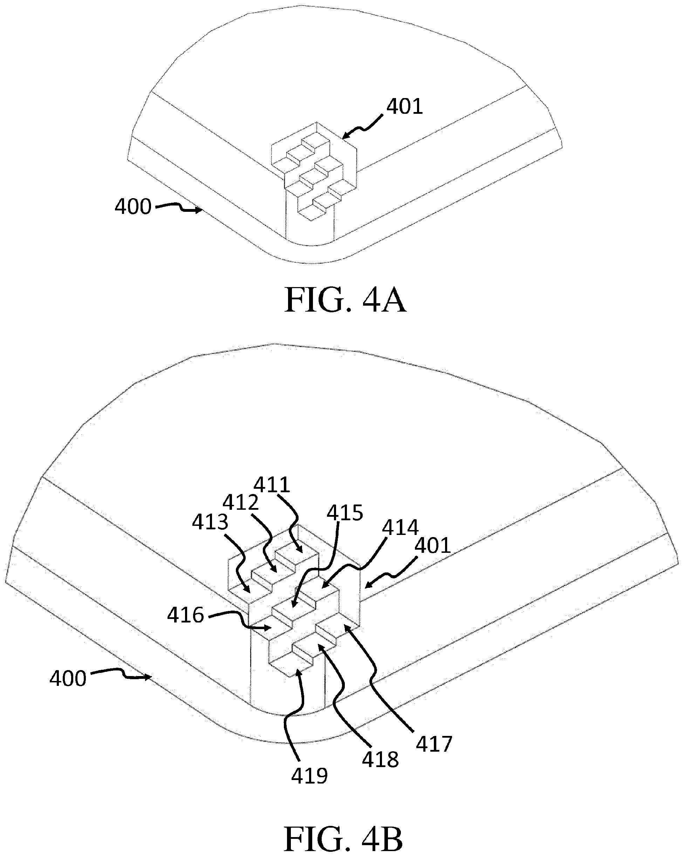

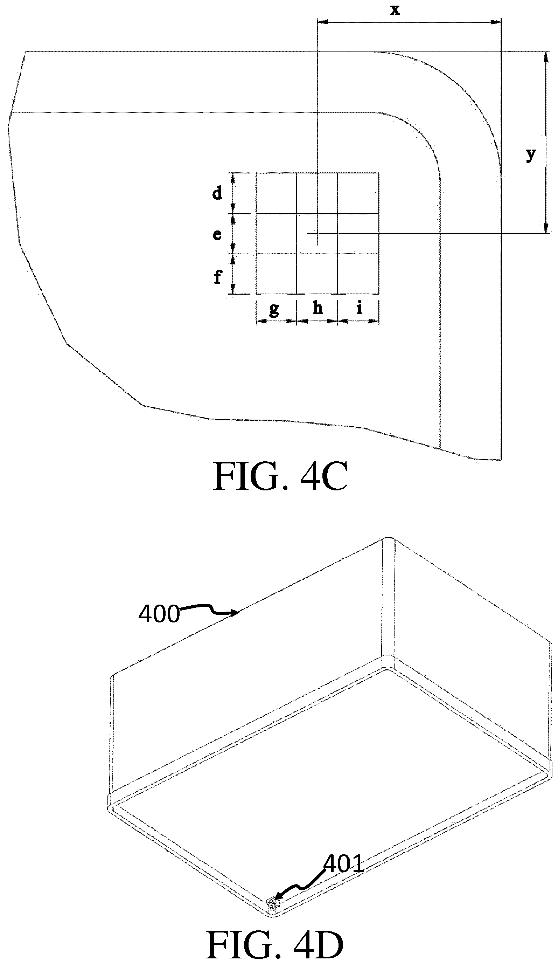

FIGURES 4A - 4D illustrate a fourth exemplary embodiment capable of supporting at least some embodiments of the present invention, the embodiment comprising an exemplary complex reference feature 401 fabricated as part of the object 400. The complex reference feature 401 comprises a grid of reference surfaces 411,412, 413, 414, 415, 416, 417, 418, 419, the surfaces being arranged to be parallel to each other. Each surface of the reference feature 401 has a different height with respect to the object surface, as can be seen in Figure 4B. For example:

**Table 1. Distances from object surface to reference surfaces of a complex reference feature (Fig. 4B)**

| | | |
|---|---|---|
| 10 mm (411) | 11 mm (412) | 12 mm (413) |
| 13 mm (414) | 14 mm (415) | 15 mm (416) |
| 16 mm (417) | 17 mm (418) | 18 mm (419) |

In the example presented above, the reference feature is comprised by a total of nine surfaces, which may be situated at the height indicated in the table cell relative to the underside of the object. Therefore the upper left and bottom right surfaces have a height difference of 8 millimeters in this example. However, the principle is usable with objects having measurements of 1:10 of the above example, e.g. wherein the total height difference would be 0.8 millimeters, or in a further exemplary embodiment, 0.5 millimeters.

As seen in Figure 4C, each reference surface has a first width d, e, f and a second width g, h, i. In an exemplary embodiment, the dimension or distance g may be 0.2 millimeters and the distance or dimension d may be 1 millimeter, resulting in a surface of 0.2 millimeters times 1 millimeter. It is understood that the first and second width dimensions may be independent with respect to each other. The dimensions d, e, f, g, h, i may be preferably between 0.1 millimeters and 50 millimeters, more preferably between 0.15 millimeters and 3 millimeters, for example 1 millimeters. In a further exemplary embodiment, the reference surfaces of the complex reference feature may be of different dimensions, The location of the complex reference feature is determined by the distance to the corner of the object, i.e. by the coordinate distances x and y. The dimensions x and y may be preferably between 1 millimeters and 100 millimeters, more preferably between 3 and 10 millimeters.

In an exemplary embodiment, the determination of the positioning of the object is performed as follows. Firstly, the reference features may be measured by the sensors. The sensor beam size is such that the sensor will not measure more than one surface of the reference feature, or, to clarify, the surfaces have been sized so that the sensor will only return the value of the single surface in this embodiment. Each sensor will then return the measurement of the corresponding reference feature, e.g. each corner. As the position of the sensors in relation to the liquid handling system or laboratory device is known, by comparing the measured values to the stored values, the object position can be determined. Relating to beam transmission within this disclosure, use of the term "beam" or drawings representing a beam as a unidirectional element may be not intended to limit the beam to only travelling in a single direction. Rather, in the context of beams it is understood that depending on the sensor technology being used, there may be one or more secondary (returning) beams or multiple beams may be used depending on the array of sensors comprising the sensor which is part of the embodiment.

In a further exemplary embodiment, there may be four of the complex reference features, in accordance with the example described above, situated near each corner of the object. Each of the complex reference features has the same orientation with respect to the object, whereas the distances of the reference surfaces may be stated in Table 1. In addition, the sensors may be positioned so that they correspond with the ideal position of the object. Therefore, it is clear that if all of the sensors measure the distance to be 14 mm the object is correctly positioned, i.e. each reference feature is located directly above each sensor. In another situation, if the sensors all read 13 mm, it can be resolved that the object is 1 mm to the right, as the sensor position measures the surface which is on the left side from center (seen from above the object). In a third exemplary situation, if all of the sensors read 10 millimeters, the object is situated 1 mm right and one millimeter "up" from center (seen from above the object). Finally, in a situation where the sensor relating to a single corner (bottom left) provides the correct 14 mm distance, and the closest of the other three sensors (upper left) provides 10 mm distance while the other two provide 12 mm (upper right) and 11 mm (bottom right), then the situation can be understood by the control system to be such that the object is correctly positioned at one corner but diagonally oriented with regards to the other four corners.

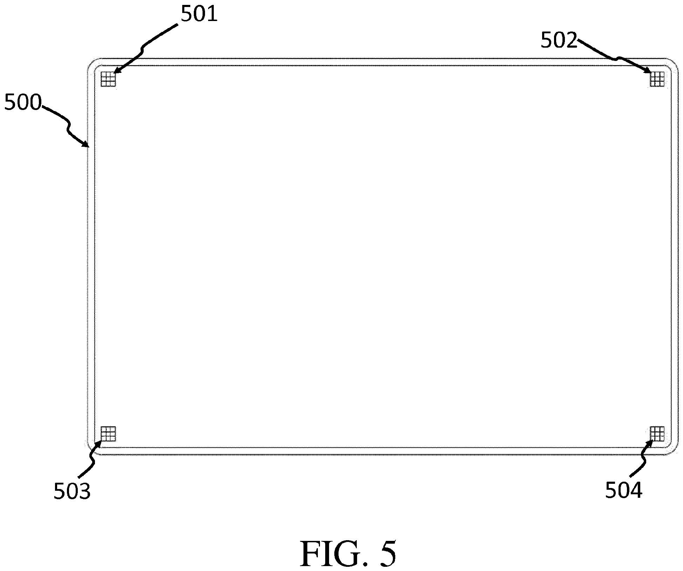

In a fifth exemplary embodiment, as seen in Figure 5, an object 500 comprises four complex reference features 501, 502, 503, 504. One reference feature is situated in the vicinity of each corner of the object. However, if an object is round or lacks corners, the reference features may be placed on the object in any configuration.

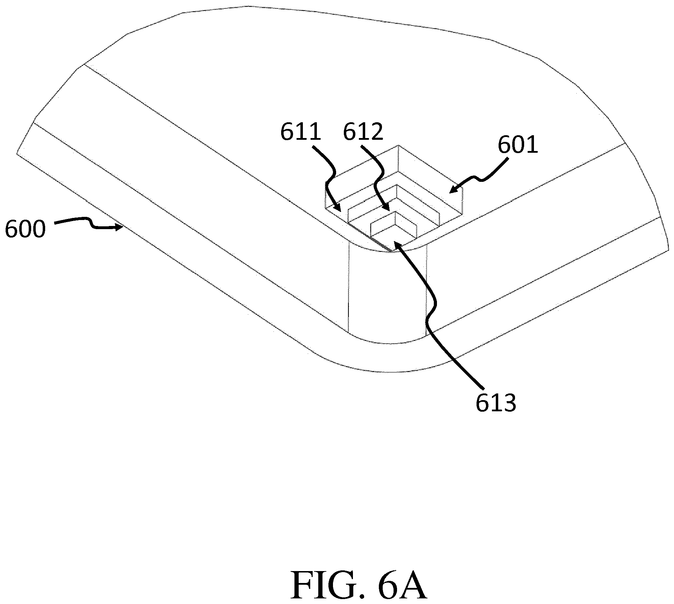

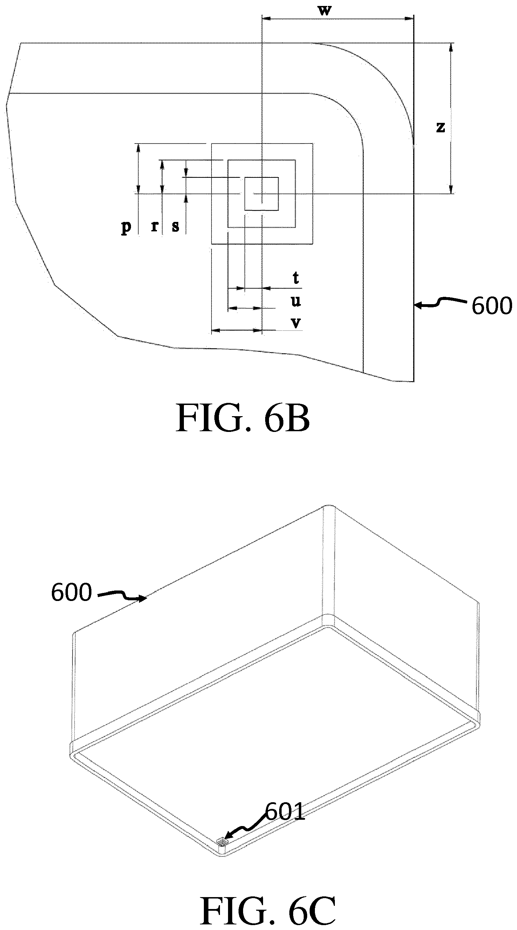

In a sixth exemplary embodiment, as seen in Figures 6A-6C, an object 600 comprises at least one complex reference feature 601. The complex reference feature 601 is comprised of three reference surfaces 611, 612 and 613 arranged in a concentric manner and so that the reference surfaces may be parallel to each other. Therefore, the surface 612 protrudes from the surface 611 and the surface 613 in turn protrudes from the surface 612. Figure 6B shows the relevant dimensions w, z, p, r, s, t, u, v relating to sizing and positioning of the feature on the object. Dimensions p, r, s, t, u, v may be between 0.1 millimeters and 50 millimeters, more preferably between 0.15 millimeters and 3 millimeters, for example 1 millimeters. The location of the complex reference feature is determined by the distance to the corner of the object, i.e. by the coordinate distances w and z. The dimensions w and z may be preferably between 1 millimeters and 100 millimeters, more preferably between 3 and 10 millimeters.

In a further exemplary embodiment, the dimensions of the reference surfaces in the sixth embodiment may be as follows: the surface 613 is 1 millimeter by 1 millimeter, the surface 612 is 2 millimeters by 2 millimeters and the surface 611 is 3 millimeters by 3 millimeters. The height differential between the surfaces 613, 612, 611 and the surface of the object 600 is 0.5 millimeters between each surface, e.g. the height differential between 613 and the surface is a total of 1.5 millimeters. In a further beneficial embodiment usable with all of the embodiments disclosed herein, the height differential h may differ between surfaces, e.g. the differential between a first and a second surface could be 1.5, 2, or 3 times as large as the differential between a second and a third surfaces, or vice versa. Using such variation has the benefit of providing increased accuracy for the measurement as the results will show clear changes in the measured distances compared to the lateral position of the object.

The complex reference feature of the sixth exemplary embodiment is suitable for use with all of the methods described herein. The configuration is especially beneficial as it provides a high degree of accuracy using only three reference surfaces, which reduces the complexity of manufacturing the complex reference feature. A measured value indicating the first reference surface 611 provides the information that the object is somewhat correctly positioned, whereas a measured value indicating the second reference surface 612 provides the information that the object is more accurately positioned. Finally, due to the much smaller size of the third reference surface 613, a measured value indicating the third reference surface is a good indication that the object is positioned sufficiently well to allow operations to take place within the liquid handling system such as automated pipetting. In a further exemplary embodiment, usable with the embodiments disclosed herein, the results of the measurement may allow the liquid handling system to determine if the object is sufficiently accurately positioned based on the application, that is to say that for certain operations less accuracy is needed than for others. The present disclosure provides measurements of sufficient quality to allow the system to make a determination to that effect.

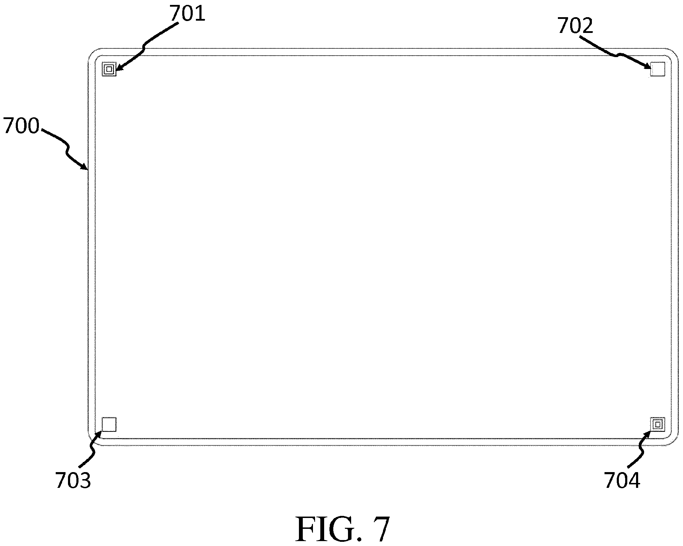

In a seventh exemplary embodiment, as seen in Figure 7, an object 700 comprises four reference features 701, 702, 703, 704. The reference features 701 and 704 may be complex reference features and the features 702 and 703 may be simple features. The combination of simple and complex features provides the benefit of increasing the amount of data points obtainable from the object while simplifying the manufacturing process with respect to the simple reference features. While the features may be shown located by the corners of the object, the features may be located in any location on the object.

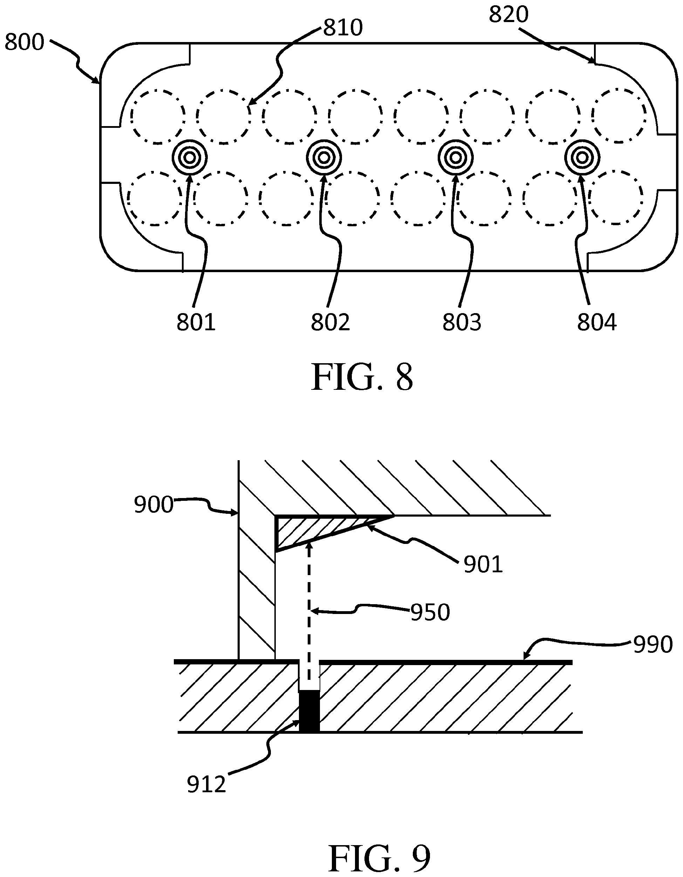

In an eighth exemplary embodiment, as seen in Figure 8, an object 800 comprises four reference features 801, 802, 803, 804. The reference features may be comprised of round reference surfaces, which may be suitable for use in this and the other embodiments disclosed herein. The object also comprises legs or stands which may be an integral part of the object, such as element 820. In addition, the object may comprise wells, holes or cavities for holding liquids, tubes or bottles, for example element 810. In an exemplary embodiment, the object comprises at least four such holes, preferably at least twelve holes, specifically at least sixteen holes. As can be seen in the figure 8, the reference features 801, 802, 803, 804 may be beneficially situated in the space between groups of holes which allows for the measurement to take place closer to the tube holes and also simplifies the manufacturing of the object.

In a ninth exemplary embodiment, the sensor concept detailed in the present disclosure can be used to verify the condition of the object and thereby prevent any process errors caused by e.g. a deformed or broken object. This is achieved by creating multiple predetermined reference features during the object manufacturing process. In an exemplary embodiment, the reference features may be located on each corner of the rectangular object, with corresponding sensors located on the surface of the system table respectively. The exemplary embodiment may be beneficially used with other embodiments disclosed herein.

For example the correct distance may be 10 millimeters between the surface of the liquid handling system table and the alignment or center surface of the reference feature of the object. The alignment or center surface may then be surrounded by additional second surfaces, arranged annularly, which may be 2 millimeter higher than the center surface. These additional surfaces may be surrounded by third surfaces, also arranged annularly, wherein the third surfaces may be 4 millimeters higher than the center surface and thus 2 millimeters higher than the second surface. Utilizing this arrangement on the object, if the sensor returns a value of 10 millimeters, it can be seen that the object is quite precisely aligned. However, if the returned value is 12 millimeters, there appears to be some error in the alignment. Finally, if the returned value is 14 millimeters, it is clear that there is some issue with the object.

Using the above-described method at multiple locations of the object allows for precise determination of the object condition. For example, if there is a total of four reference features on the object, one near each corner of the object, and three out of the four sensors return correct values, it can be determined that there is some issue impacting the corner returning an incorrect value. The measurements may be done simultaneously or sequentially, depending on the embodiment. In a further exemplary embodiment, there may be a total of eight reference features, one near each corner on the underside of the object and four situated on the side surfaces of the object, measured from the sideways direction. In a further exemplary embodiment, simple and complex reference features may be used in combination, providing at least a benefit in reduced complexity for manufacturing while increasing the amount of data obtainable from the feature arrangement.

In a tenth exemplary embodiment in accordance with the methods and embodiments of the disclosure, the degree of deformation or damage to the object can be determined. In the case that the object is in good condition, the sensor will measure the distance to a predetermined surface of the reference feature and compare that value to the correct stored measurement value as described previously in this disclosure. The result will then indicate that the object is unharmed. However, if the object is deformed, bent or misshaped, the sensor will measure the distance to either a different surface of the reference feature or, if the deformation is severe, to a different surface present on the object. The determination based on the measurement is then performed and, as the values do not match, it is indicated to the control system that the object is defective. As the complex reference feature may comprise several surfaces or a curved surface, the degree of the deformation can be evaluated based on the measured distance.

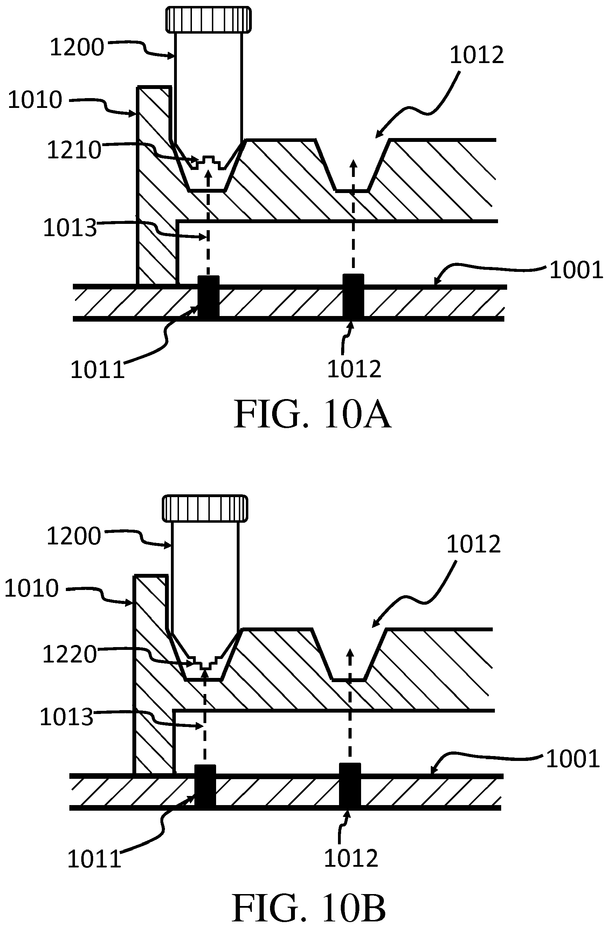

In a eleventh exemplary embodiment, as seen in Figure 9, the concept detailed in the present disclosure can be used to verify the position of a sloped reference features using a single sensor. In the exemplary figure 9, the object 900 is comprised of a reference feature 901 , which comprises a sloped surface. The object 900 rests on the fixed or movable surface 990 of the liquid handling machine. Embedded within the surface may beis sensor 911, which is a type of sensor suitable for measuring distance and which emits beam 950. It can be seen that the lateral position of the object 900 has an effect on the distance between the sensor 912 and the reference feature 901, i.e. on the distance the beam travels. Therefore, when the height of the distinguishing feature as well as the expected distance to the object itself may be known, the lateral position can be determined based on the vertical measurement. aIn an twelfth exemplary embodiment, as seen in Figure 10A, the concept detailed in the present disclosure can be used to verify the presence or other attributes of at least one object using one or more sensors. In the exemplary Figure 10 the object 1200 comprises a reference feature 1210, which may be any type of reference feature presented within this disclosure. In Figure 10, the reference feature 1210 is a cavity-type feature, which in a further exemplary embodiment may be filled with optically clear material (not shown in the figure). The rack 1010 is comprised of slots 1012 which may be configured to fit an object 1200, as can be seen in the Figure wherein the left slot holds an object and the right slot is empty. Rack 1010 is placed on surface 1001 of the liquid handling system. Surface 1100 has sensors 1011 and 1012 mounted within the surface in such a manner that the sensors protrude from the surface. In a further exemplary embodiment, one or more of the sensors may be mounted to be flush with the surface 1001 or in such a manner that the top of the sensor is lower than the upper plane of surface 1001. Rack 1010 is comprised of an optically transparent material so that beam 1013 emitted from sensor 1011 proceeds through the rack 1010 and measures details relating to object 1200. In a further exemplary embodiment, the rack 1010 comprises optically variant sections or elements such as holes to allow for the passage of the beam from each sensor. As can be seen in the exemplary Figure, the beam emitted from sensor 1012 proceeds through the rack and, as no object is present, the sensor returns information indicating that an object is not present in slot 1012. As the reference feature 1210 is a complex reference element, the system can obtain from the sensor data gathered by sensor 1011 the presence and information relating to the accuracy of the positioning of object 1200 with respect to the sensor. Therefore the system can provide data as follows in this exemplary situation: slot 1 has an object present which is positioned with 1mm accuracy, slot 2 does not have an object present.

Further relating to the exemplary embodiment displayed in Figure 10, in embodiments where optically variant sections or elements such as holes may be used, the sensor data is usable to determine the correct position of the rack as well as the objects, in situations where the sensors have been arrayed corresponding to the optically variant sections of the rack. Therefore, the use of at least some of the embodiments of the present disclosure allows sensing both a first object, e.g. a rack, and a second object, e.g. a tube, by means of a single sensor and even determining further details such as the type and/or condition of the second object.

Figure 10B illustrates a schematic view of an exemplary embodiment similar to that presented in Figure 10A. In the displayed embodiment, the reference feature 1220 extends outward from the body of the object 1200. The embodiment presented may be combined with any of the embodiments of this disclosure and provides similar benefits as laid out with respect to the embodiment of Figure 10A.

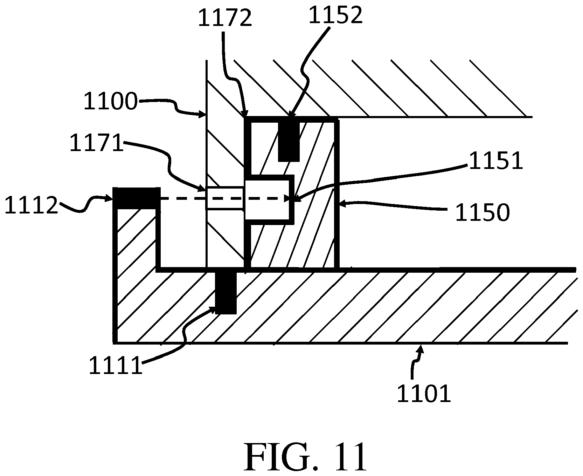

In an thirteenth exemplary embodiment, as seen in Figure 11, the concept detailed in the present disclosure can be used to verify the presence or other attributes of at least one object using one or more sensors. In the Figure element 1101 comprises the sensors 1112 and 1111, of which sensor 1112 is oriented in the horizontal direction and sensor 1111 is oriented in the vertical direction. Advantageously in at least one further exemplary embodiment, the sensor 1111 is a mechanical sensor. In addition, reference element 1151 is placed on the top surface of element 1101. In at least one beneficial further embodiment, the reference element 1151 is an integral part of the element 1101 to provide increased rigidity to the construction of the reference element. However, in the embodiment shown in Figure 11 the reference element is movably attached by any suitable attachment means including those listed later within this disclosure. Said attachment means may be not shown in the Figure for the sake of increased clarity. An advantage of the movable reference element is the reconfigurability of the system to fit multiple objects. Reference element 1151 may incorporate additional sensing capability such as capacitance sensing, e.g. by sensor 1152 in further embodiments of the disclosure to provide more accurate details relating to the object to be measured. Sensor 1152 may also be a mechanical sensor or not present at all in further exemplary embodiments.

When the element 1100 is placed on surface 1101, the upper surface and the side surfaces of reference element 1150 may be used to mechanically ensure the position of the corresponding features of element 1100 as seen in the Figure 11, including the position of the corner 1172 of object 1100. Sensor 1111 is then usable to determine that the lower portion of object 1100 is contacting the upper surface of element 1101 properly. Element 1100 comprises one or more elements 1171. Element 1171 is opening in the material in at least the embodiment shown in Figure 11, with at least one dimension of the opening (e.g. the side of a rectangular hole or the diameter of a circular hole) being advantageously between 1 millimeter and 20 millimeters, preferably between 3 millimeters and 6 millimeters. For example, the hole may be circular with a diameter of 4 millimeters. The element 1171 allows the beam emitted by the sensor 1112 to proceed through the element 1100 and to contact reference surface 1151 of the reference element 1150, said reference surface being located on the same side of the element as the sensor in the embodiment in question without limiting other embodiments within the scope of this disclosure. In further exemplary embodiments, the element 1171 is an optically variant portion of the object 1100. Such a optically variant portion may be manufactured or treated by at least one of the following methods: use of a different material compared to the main portion, use of a selectively applied additive, use of a coloring agent, surface application of a printed material, surface application of a coloring agent, treatment of the surface such as etching or milling, spark eroding. In a further beneficial embodiment the reference features may be self-illuminating, via illuminating means such as LED lights placed within the reference features, or reference features may be comprised out of luminescent material, e.g. luminescent plastic. This has the beneficial technical effect of providing improved detection of the reference features both by machine means as well as by humans.

In the context of the embodiment shown in Figure 11, there may be at least four sources of information in the system with respect to the object 1100, namely the first and second sensors 1111 and 1112 and the reference element 1150 and sensor 1152. Any of these sources may be used in exemplary embodiments singly, jointly in any combination, or duplicated in any combination to allow for sensing objects with different dimensions and precision. With respect to the sensor 1112, if the object 1100 is incorrectly placed in the system, the beam will not contact the reference surface 1151 as the beam will be intercepted by the body of object 1100. Correct positioning will lead to the beam being occluded during placement of the object 1100 and then the beam contacting the reference surface 1151. Therefore, useful data may be provided by recording successive measurements and/or recording the measurement data for a certain time prior to analysis, especially in further embodiments wherein the sensors may be constantly providing data during operation.

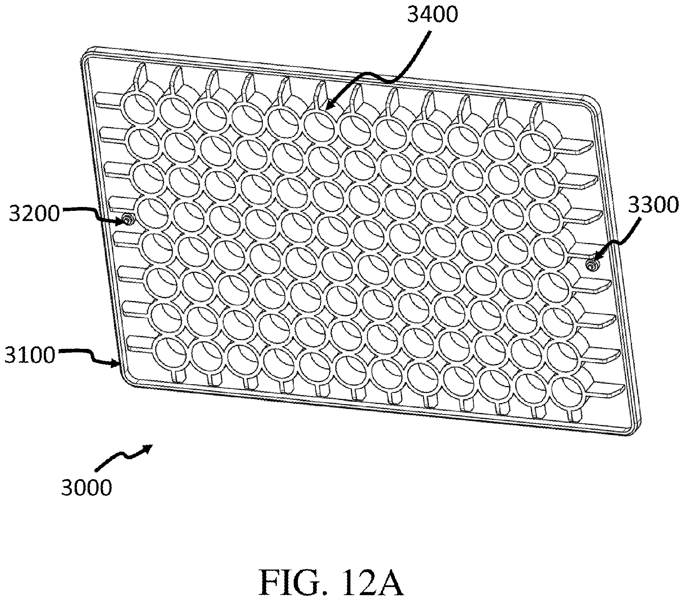

In an thirteenth exemplary embodiment, as seen in Figures 12A - 12B, the presence, position and condition of a supporting structure such as a pipette tip rack is determined using methods outlined within this disclosure. Figure 12A shows the rack surface of an exemplary pipette tip rack 3000 comprising frame 3100, complex reference features 3200 and 3300, as well as a plurality of tip holes 3400. The aforementioned components may be ideally manufactured as an unitary entity, or in the alternative may comprise several separate parts.

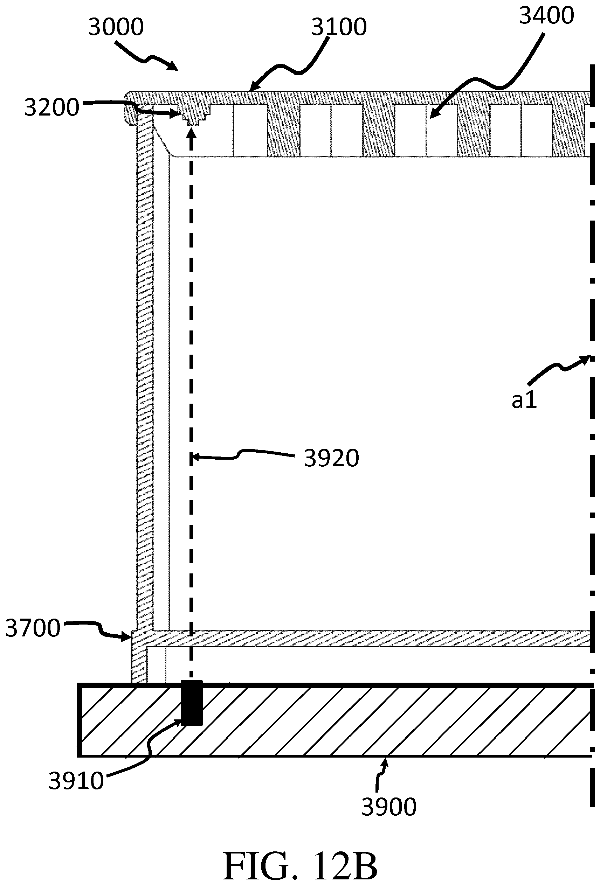

Figure 12B shows a schematic side view of the exemplary pipette tip rack 3000, wherein only a portion of the objects 3000 and 3700 may be shown. The remainder of the object is substantially similar when mirrored around axis a1. It is understood that the number of tip holes may differ from the presentation in figures 12A and 12B in accordance with the different tip sizes used in the art. Figure 12B also shows rack base 3700 which may be combined as single object with frame 3100 or be a separate object as shown in the Figure. Rack base 3700 is comprised of a material allowing optical measurements to pass through at least in part, or in an alternative embodiment, comprises optically clear patches or holes to allow for the measurement. Also, liquid handling system surface 3900 and sensor 3910 may be presented in Figure 12B.

The embodiment presented in Figures 12A and 12B allows for sensing of the correct position of the tip rack from below the tip rack using sensor 3910 and beam 3920. Similar to other embodiments of the disclosure, the distance measured by sensor 3910 will vary based on which part of the reference feature 3200 is contacted by beam 3920. This will provide the liquid handling system an indication of the current position, e.g. the lateral position, of the tip rack when compared to a predetermined value.

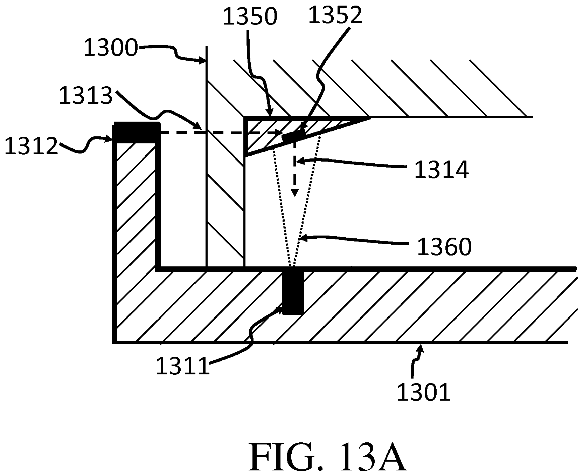

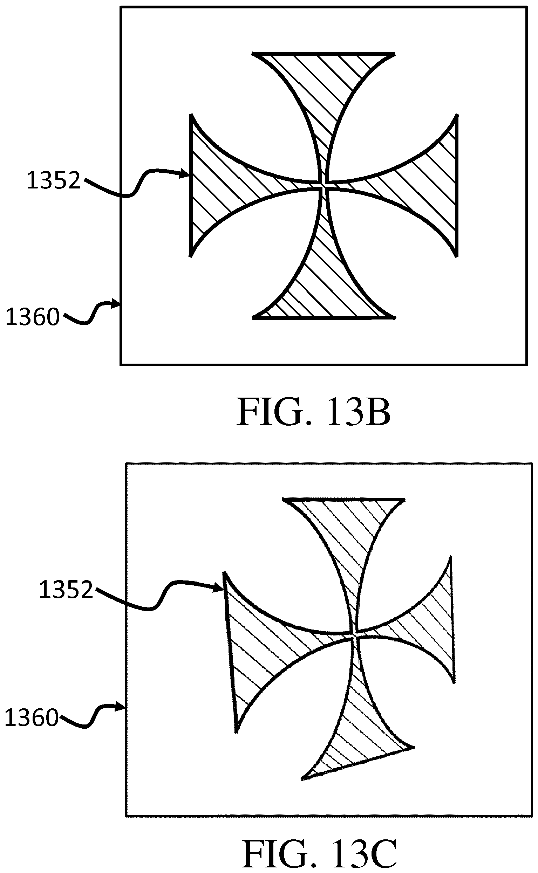

In a further additional exemplary embodiment, presented in Figures 13A, 13B and 13C, details relating to the object 1300 may be detected using illumination device 1312 and optical capture device 1311 as well as a reference feature 1350 comprising optically differentiated feature 1352. In the embodiment, the reference feature 1350 is comprised of a sloped surface, a portion of the surface comprising optically differentiated feature 1352. Reference feature 1350 is illuminated using illuminator 1312, which produces illumination beam 1313. The reference feature 1350 may be illuminated from any direction, for example from above, from below, or from the sides. The illumination may also arrive at an angle compared to the feature 1350. This provides the beneficial effect of allowing versatile placement of the illumination device 1312. The optically differentiated feature may be comprised of a different material from the rest of the feature. In addition, the outer (e.g. lower) surface of the optically differentiated feature may be treated in a way which improves the visibility quality of the feature, e.g. it may be spark eroded or any other suitable treatments may be used, including treatments and methods listed within this disclosure. The optically differentiated feature may also comprise a material which is optically less clear than the material of the reference feature, wherein the surrounding reference feature is lighter in color and the optically differentiated feature remains dark. This effect is then reinforced by the introduction of lighting. This allows for even more versatility in the illumination arrangement, including the ability to illuminate multiple reference features using a single illumination means.

Illumination beam 1313 passes through the object 1300 as well as the body of the reference feature 1350 and contacts the optically differentiated feature 1352, wherein at least a portion of the beam 1313 continues through the surface of the feature 1352 in accordance with the laws of optics. This beam is indicated as beam 1314. In addition, the surface of optically differentiated feature 1352 is illuminated. Imaging apparatus 1311 is comprised of a lens and an image capture mechanism, for example a charge-coupled device, CCD or complementary metal-oxide semiconductor, CMOS. Imaging apparatus 1311 therefore has a field of view 1360 extending from the apparatus upwards.

As can be seen in Figure 13B, the footprint of the optically differentiated feature 1352 is beneficially a shape comprising geometric features in both the X and Y dimensions, such as the cross shape shown in Figure 13B. The shape could also be comprised of at least one of the following: a cross, a checkerboard, a grid, a QR-code. The dimensions of the footprint of the optically differentiated feature 1352 may be known to the system and therefore, using imaging apparatus 1311, the distance from the apparatus 1311 to the feature 1352 can be determined using pixel calculation methods. Further, since the expected position of the feature 1352 within the field of view 1360 is known, the actual position of the feature is informative with respect to the actual position of the object 1300 in comparison to the desired or expected position. In addition, since the dimensions of the individual geometric features may be also known, the skew or rotation can also be determined, which allows for determination of rotation and placement data of the entire object 1300. An exemplary image depicting how the geometric elements can contribute to the information gathering can be seen in Figure 13C. It can be seen in the exemplary image that the right side of the cross is smaller than the left side. Therefore, it is apparent that the left side is closer. The sizes of the other two parts of the cross provide additional data as to the nature of the situation, e.g. is the reference feature deformed, incorrectly positioned or merely tilted.

Similar to the illumination means 1312, the imaging means 1311 may be positioned or placed in various manners to acquire the image, for example: imaging means located below object, imaging means located above object, imaging means located on side of object, imaging means using additional at least one mirror to acquire the image. Benefits of this embodiment include the possibility of gathering accurate data regarding the position of the object by only using a single imaging means.

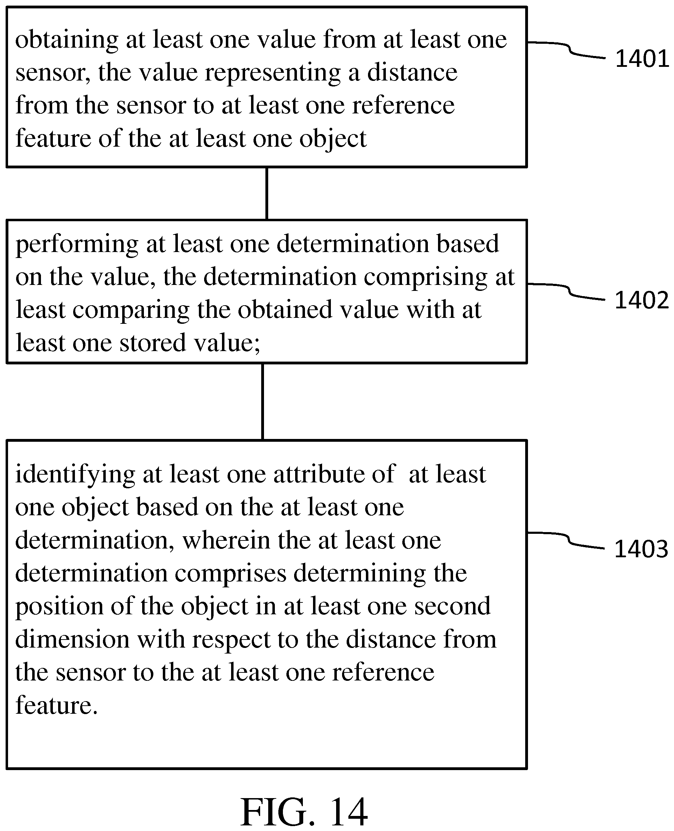

Figure 14 displays an exemplary method in accordance with at least some of the embodiments of the disclosure. In the exemplary method, comprised of steps 1401, 1402, 1403, a value is first obtained from a distance sensor in step 1401, the value representing the distance from the sensor to the reference feature of the object or, should the object be placed incorrectly, to the object itself. This value is then compared in step 1402 to a value stored within the memory of the liquid handling system or subsystems thereof. In step 1403, based on the determination, e.g. if the measured distance equals a calculated or predefined distance, a conclusion is reached with regards to the position of the object. Said conclusion may be that the object is correctly positioned, or it could be that the object is incorrectly positioned at least in part. This conclusion may then be communicated to the liquid handling system and to the user.

Benefits of the present disclosure include the following: computationally cheap determination of object condition, position, identity and type as part of a larger system, small sensor apparatus size which allows for a smaller and more compact liquid handling apparatus, use of multiple sensors easily due to simple incorporation of multiple sensors into sensor suite. Overall, use of a system such as described herein prevents errors due to faulty or damaged packaging or objects or human errors. In addition, the use of a reference feature to identify the objects reduces the need for packaging material due to no identification required in the package of the product as opposed to the product itself. In adition, no added plastics, such as stickers, or electronics such as NFC/RFID are required. Finally, the solution presented herein is less prone to errors than traditional machine vision-based solutions.

In accordance with the embodiments described herein, reference features, objects, sensors, reference surface and other entities may be attached by use of any of the following solutions singly or jointly: polymeric fusion or welding of plastics, adhesive compounds such epoxy and/or glue, hook-or-loop fastener, screws, bolts, threaded holes, clasps, hitches, locks, nails, snap-fits, snap-fasteners, zip-ties, magnets, electro-magnets.

In accordance with the embodiments described herein, a control system is used to facilitate at least some of the methods performed with respect to the object. In some embodiments, a programmable logic controller, PLC, may be used as the control system. The standard IEC-61131 defines programmable logic controllers, however, in the present disclosure the term PLC is not limited to the standard. The PLC may be connected to the sensors and other devices in the system by a variety of means, including but not limited to electrical wires. Another type of control system may comprise, for example, a computing device such a server, node or cloud computing device. Comprised in the computing device is a processor, which may comprise, for example, a single- or multi-core processor wherein a single-core processor comprises one processing core and a multi-core processor comprises more than one processing core. The processor may comprise more than one processor. A processing core may comprise, for example, a Cortex-A8 processing core by ARM Holdings or a Steamroller processing core produced by Advanced Micro Devices Corporation. The processor may comprise at least one Qualcomm Snapdragon and/or Intel Core processor, for example. The processor may comprise at least one application-specific integrated circuit, ASIC. The processor may comprise at least one field-programmable gate array, FPGA. The processor may be a means for performing method steps in the computing device. The processor may be configured, at least in part by computer instructions, to perform actions.

In some embodiments, a network is used to facilitate communication to and from the control system, sensors, devices and other elements of the present disclosure. The network technologies comprise: wireless local area network, WLAN, Ethernet, universal serial bus, USB, and/or worldwide interoperability for microwave access, WiMAX, standards, and satellite communication methods, for example. Alternatively or additionally, a proprietary communication framework may be utilized. In some embodiments, separate networks may be used for one or more of the following purposes: communication between control systems, communication between controllers and sensors, communication between controllers and servers, et cetera.

It is to be understood that the embodiments of the invention disclosed may be not limited to the particular structures, process steps, or materials disclosed herein, but may be extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification may be not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives may be not to be construed as de facto equivalents of one another, but may be to be considered as separate and autonomous representations of the present invention.

Furthermore, the described features, structures, or characteristics may be combined in any suitable manner in one or more embodiments. In this description, numerous specific details may be provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations may be not shown or described in detail to avoid obscuring aspects of the invention.

While the forgoing examples may be illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" may be used in this document as open limitations that neither exclude nor require the existence of also un-recited features. The features recited in depending claims may be mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in liquid handling applications, such as automated liquid handling devices.

**REFERENCE SIGNS LIST**

| | |
|---|---|
| 100 | Object |
| 101 | reference feature |
| 102 | reference surface of reference feature |
| 105 | beam of sensor 212 |
| 201 | surface of liquid handling system table |
| 211 | sensor |
| 212 | sensor |
| 300 | Object |
| 301, 302, 303, 304 | reference feature |
| 400 | Object |
| 401 | reference feature |
| 411, 412, 413, 414, 415, 416, 417,418,419 | reference surface of reference feature |
| 500 | Object |
| 501, 502, 503, 504 | reference feature |
| 600 | Object |
| 601 | reference feature |
| 611, 612, 613 | reference surface of reference feature |
| 700 | Object |
| 701, 704 | complex reference feature |
| 702, 703 | simple reference feature |
| 800 | object |
| 810 | hole or slot for tube |
| 820 | portion of object used as foot or stand |
| 801, 802, 803, 804 | reference feature |
| 900, 1200, 1100 | Object |
| 902, 901 | reference feature comprising sloped surface |
| 912, 911 | Sensor |
| 990 | surface of element of liquid handling apparatus |
| 991, 992 | Slots for sensors in surface of apparatus |
| 950 | beam emitted by sensor |
| 1001 | element of liquid handling apparatus |
| 1010 | Rack |
| 1012 | Slot in rack |
| 1013 | beam of sensor |
| 1011, 1012 | Sensors |
| 1210 | reference feature (cavity type) |
| 1220 | reference feature (extrusion type) |
| 1150 | reference element |
| 1101 | element of liquid handling apparatus |
| 1112, 1111, 1152 | sensors |
| 1171 | optically variant region or hole |
| 1151 | reference surface |
| 1172 | corner of object |
| 3000 | Pipette tip rack |
| 3200, 3300 | Reference element |
| 3100 | Frame of tip rack |
| 3400 | Tip hole |
| 3700 | Tip rack base |
| 3910 | Sensor |
| 3920 | Sensor beam |
| 3900 | liquid handling apparatus |
| 1300 | object |
| 1312 | illumination apparatus |
| 1313 | beam |
| 1350 | reference feature |
| 1352 | optically differentiated element |
| 1314 | portion of illumination reflected through reference feature |
| 1360 | field of view of imaging apparatus |
| 1301 | liquid handling apparatus |
| 1311 | imaging apparatus |
| 1401, 1402, 1403 | steps of method |

**MEASUREMENT LIST**

| | |
|---|---|
| h | height of reference feature |
| j | distance from center of reference feature with respect to corner of object |
| k | first width dimension of reference surface of reference feature |
| i | second width dimension of reference surface of reference feature |
| a | distance between liquid handling system surface and reference surface of reference feature |
| b | width of reference surface of reference feature |
| c | width of object footprint |
| f | distance from center of reference feature with respect to corner of object |
| e | first width dimension of reference surface of complex reference feature |
| d | second width dimension of reference surface of complex reference feature |
| w, z, p, r, s, t, u, v | dimensions of a complex reference feature in accordance with Figure 6B |

## Claims

1. A method for detecting the presence of a reference feature of an object located on at least one surface of a liquid handling system and obtaining information regarding the object, the method comprising:
- obtaining at least one value from at least one sensor, the value representing a distance measured by the sensor to at least one reference feature of the object;
- comparing the obtained value with at least one stored value relating to the object; and
- based at least in part on the comparison, detect the presence of the reference feature of the object.

2. The method of claim 1, wherein the at least one detection comprises determining a position of the object and wherein the position of the object is determined in at least one other dimension with respect to dimension of the distance from the sensor to the at least one reference feature.

3. The method of any preceding claim, wherein at least one attribute of the object is identified based on the detection, and wherein the at least one attribute comprises an identity, type or condition of the at least one object.

4. The method of any preceding claim, wherein the at least one object comprises at least one of the following: a pipette tip package, a pipette tip rack, a disposable pipette tip package, a microwell plate, a bottle rack, a test tube rack.

5. The method of any preceding claim, wherein the at least one reference feature comprises one or more surfaces and wherein the one or more surfaces may be parallel to one another.

6. The method of any preceding claim, wherein dimensions of at least one surface of the the at least one reference feature may be between 10 by 10 millimeters, preferably less than 5 by 5 millimeters, in particular less than 1 by 1 millimeters.

7. The method of any preceding claim, wherein the at least one sensor is a time-of-flight sensor.

8. The method of any preceding claim, wherein the at least one sensor is a reflected light sensor.

9. The method of any preceding claim, wherein the at least one sensor is a mechanical gauge.

10. The method of any preceding claim, wherein the method comprises using at least one other sensor to perform at least one second measurement, and wherein the at least one comparison is at least partly based on values obtained from the sensor and the other sensor.

11. An apparatus configured to at least:
- obtain at least one value from at least one sensor, the value representing a distance from the sensor to at least one reference feature of the at least one object;
- compare the obtained value with at least one stored value relating to the object; and
- based at least in part on the comparison, detect the presence of the reference feature of the object.

12. An apparatus in accordance with claim 11, wherein the reference feature of the at least one object comprises multiple reference surfaces at different distances from the sensor.

13. An apparatus in accordance with any of claims 11-12, wherein at least one attribute of the object is identified based on the detection, and wherein the at least one attribute comprises an identity, type or condition of the at least one object.

14. An apparatus in accordance with any of claims 11-13, wherein the at least one determination is used to determine the position of the object.

15. An apparatus in accordance with any of claims 11-14, wherein the at least one determination is based at least partly on a second measurement performed by at least one second sensor.

16. An apparatus in accordance with any of claims 11-15, wherein the apparatus is a liquid handling system.

17. A reference feature for laboratory items, the feature being configured to be measured by at least one sensor, wherein the result of the measurement is compared to a stored value.

18. The reference feature of claim 17, wherein the feature is comprised of a single surface or multiple surfaces parallel to one another.
